# EUROPÄISCHE PATENTSCHRIFT

(11) **EP 3 037 683 B1**
(45) Veröffentlichungstag und Bekanntmachung des Hinweises auf die Patenterteilung: **17.07.2019**
(21) Anmeldenummer: 15200647.4
(22) Anmeldetag: 17.12.2015
(51) Int. Cl.: F16C 1/16, E05B 81/20, E05B 79/20, F16C 1/10

(54) **SCHLIESSHILFSANTRIEB FÜR EIN KRAFTFAHRZEUGSCHLOSS**
AUXILIARY LOCKING DRIVE FOR A MOTOR VEHICLE LOCK
ENTRAINEMENT D'AIDE À LA FERMETURE POUR UNE SERRURE DE VÉHICULE AUTOMOBILE

(30) Priorität: 18.12.2014 DE 202014106158 U
(43) Veröffentlichungstag der Anmeldung: 29.06.2016
(73) Patentinhaber: Brose Schliesssysteme GmbH & Co. KG, 42369 Wuppertal (DE)
(72) Erfinder: Graute, Ludger, 45130 Essen (DE); Hehemann, Dirk, 58332 Schwelm (DE); Kamberg, Axel, 50169 Kerpen-Horrem (DE); Simkin, Oleg, 50769 Köln (DE)
(74) Vertreter: Gottschald, Jan

(56) Entgegenhaltungen:
- EP-A1- 0 444 780
- DE-A1- 1 931 732
- DE-U1-202012 004 789
- JP-U- S6 255 719

## Beschreibung

Die Erfindung betrifft einen Schließhilfsantrieb für ein Kraftfahrzeugschloss mit den Merkmalen des Oberbegriffs von Anspruch 1 und ein Verfahren zur Herstellung eines Schließhilfsantriebs mit den Merkmalen des Oberbegriffs von Anspruch 16.

Vorliegend sind unter dem Begriff "Kraftfahrzeugschloss" alle Arten von Tür-, Hauben-, Deckel- oder Klappenschlössem zusammengefasst.

Aus der DE 19 31 732 A1 ist es beispielsweise bekannt, Bowdenzüge an Kraftfahrzeugteilen vor deren Einbau an diesen zu befestigen und die beiden Bowdenzüge nach dem Einbau durch Verbindungsstücke zu verbinden. Die DE 19 31 732 A1 schlägt nun eine besonders bevorzugte Ausgestaltung dieser Verbindung von zwei Bowdenzügen vor.

Der bekannte Schließhilfsantrieb (DE 20 2012 004 789 U1), von dem die Erfindung ausgeht, ist einem Kraftfahrzeugschloss zugeordnet und mit diesem über einen Bowdenzug antriebstechnisch gekoppelt. Der Schließhilfsantrieb dient hier der motorischen Verstellung der Schlossfalle des Kraftfahrzeugschlosses von einer Vorschließstellung in eine Hauptschließstellung. Zur Erzeugung von Antriebsbewegungen ist der bekannte Schließhilfsantrieb mit einem Antriebsmotor und einem dem Antriebsmotor nachgeschalteten Vorschubgetriebe ausgestattet. Die Spindel ist über ein Kupplungselement fest mit einer Bowdenzugtonne des Bowdenzugs verbunden, so dass der Schließhilfsantrieb stets zusammen mit dem Bowdenzug kommissioniert und montiert wird.

Nachteilig bei dem bekannten Schließhilfsantrieb ist die Tatsache, dass die Kommissionierung des Schließhilfsantriebs zusammen mit dem Bowdenzug aufwendig ist, insbesondere im Hinblick auf Lagerung und Transport. Ferner muß bei der Montage an der Kraftfahrzeugtür o. dgl. darauf geachtet werden, dass ein Verdrehen des Bowdenzugs um seine Längserstreckung vermieden wird, um ungewünschte mechanische Torsionsspannungen im Bowdenzug nicht auftreten zu lassen. Solche mechanischen Torsionsspannungen erschweren die Montage und können die Funktion des Schließhilfsantriebs beeinträchtigen. Ganz allgemein ergibt sich damit eine aufwendige Handhabung des bekannten Schließhilfsantriebs im Rahmen der Fertigung des Kraftfahrzeugs.

Der Erfindung liegt das Problem zu Grunde, den bekannten Schließhilfsantrieb derart auszugestalten und weiterzubilden, dass die Handhabung im Rahmen der Fertigung des Kraftfahrzeugs vereinfacht wird.

Das obige Problem wird bei einem Schließhilfsantrieb gemäß dem Oberbegriff von Anspruch 1 durch die Merkmale des kennzeichnenden Teils von Anspruch 1 gelöst.

Wesentlich ist die grundsätzliche Überlegung, dass die Möglichkeit einer einfachen Montage des Bowdenzugs an den Schließhilfsantrieb, die erst im Rahmen der Fertigung des Kraftfahrzeugs erfolgen kann, dazu führt, dass der Transport und die Lagerung des Schließhilfsantriebs vereinfacht ist. Weiter ist erkannt worden, dass die Montage des Bowdenzugs erst im Rahmen der Fertigung des Kraftfahrzeugs eine Vereinfachung der Montage selbst mit sich bringen kann.

Im Einzelnen wird vorgeschlagen, dass das Kupplungselement in wenigstens eine Kupplungsstellung bringbar ist, in der es für die Herstellung einer Kupplung des Bowdenzugs mit dem Kupplungselement von außen zugänglich ist. Im Übrigen soll das Kupplungselement für die Herstellung einer solchen Kupplung von außen unzugänglich sein.

Der Begriff "von außen" bedeutet, dass das Kupplungselement von außerhalb des Antriebsgehäuses für die Montage des Bowdenzugs entsprechend zugänglich bzw. unzugänglich ist.

Mit der vorschlagsgemäßen Lösung lässt sich der Schließhilfsantrieb durch die Verstellung des Kupplungselements gewissermaßen in einen Montagezustand bringen, in dem die Montage des Bowdenzugs möglich ist. Angesichts der Tatsache, dass das Kupplungselement vorzugsweise mittels des Antriebsmotors in die mindestens eine Kupplungsstellung bringbar ist, lässt sich der obige Montagezustand leicht motorisch einstellen. Bei geeigneter Auslegung lässt sich die in der Kupplungsstellung noch lösbare Kopplung zwischen dem Bowdenzug und dem Kupplungselement dadurch in eine unlösbare Kopplung überführen, indem eine entsprechende, insbesondere motorische, Verstellung des Kupplungselements vorgenommen wird. Dies wird weiter unten noch erläutert.

Bei der bevorzugten Ausgestaltung gemäß Anspruch 2 lässt sich das Kupplungselement während eines Schließhilfsvorgangs innerhalb eines Betriebs-Bewegungsbereichs verstellen, wobei in einer bevorzugten Ausgestaltung die Kupplungsstellung außerhalb des Betriebs-Bewegungsbereichs liegt. Damit wird die Kupplungsstellung beim normalbetriebsgemäßen Gebrauch des Schließhilfsantriebs zu keinem Zeitpunkt angefahren, so dass sich auch nicht die Gefahr einer ungewünschten Demontage des Bowdenzugs ergibt.

Bei der besonders bevorzugten Ausgestaltung gemäß Anspruch 4 ist für die Übertragung der Antriebsbewegungen auf den Bowdenzug zwar ein gewisser Formschluss zwischen dem Kupplungselement und einem Seelenendstück der Bowdenzugseele des Bowdenzugs vorgesehen, der jedoch eine Drehbewegung zwischen Kupplungselement und Seelenendstück um die Längserstreckung des Bowdenzugs erlaubt. Durch diese Drehbarkeit der Bowdenzugseele insgesamt werden mechanische Torsionsspannungen innerhalb des Bowdenzugs vermieden, die die Montage des Bowdenzugs erschweren und die Funktion des Schließhilfsantriebs beeinträchtigen können.

Bei der besonders bevorzugten Ausgestaltung gemäß Anspruch 7 ist ein Lösen des Formschlusses zwischen Seelenendstück und Kupplungselement nur in der mindestens einen Kupplungsstellung möglich. Sobald sich das Kupplungselement im Betriebs-Bewegungsbereich befindet, ist das Lösen des Formschlusses gesperrt. Damit kann auf zusätzliche Verriegelungselemente, insbesondere auf Clipse o. dgl., zur Fixierung des Seelenendstücks an dem Kupplungselement verzichtet werden. Das obige Sperren des Seelenendstücks an dem Kupplungselement lässt sich einfach durch eine entsprechende Ansteuerung des Antriebsmotors bewerkstelligen.

Bei den besonders bevorzugten Ausgestaltungen gemäß den Ansprüchen 12 bis 14 handelt es sich bei dem Vorschubgetriebe zur Erzeugung von Antriebsbewegungen um ein Spindel-Spindelmuttergetriebe. Dabei ist es bei der weiter bevorzugten Ausgestaltung gemäß Anspruch 14 so, dass die Spindel des Spindel-Spindelmuttergetriebes bezogen auf die geometrische Spindelachse längs verschieblich, jedoch drehfest gegenüber dem Antriebsgehäuse ist. Die drehfeste Anordnung der Spindel ergibt sich entweder durch den drehfesten Eingriff des Spindelendstücks mit dem Antriebsgehäuse oder durch den drehfesten Eingriff des Spindelendstücks mit dem Kupplungselement, das wiederum drehfest mit dem Antriebsgehäuse in Eingriff steht. Die erstgenannte Variante ist insoweit vorteilhaft, als eine eventuelle Längsführung des Kupplungselements entlang der geometrischen Spindelachse durch die auftretenden Drehmomente um die geometrische Spindelachse nicht belastet wird.

Nach einer weiteren Lehre gemäß Anspruch 15, der eigenständige Bedeutung zukommt, wird ein Verfahren zur Herstellung eines vorschlagsgemäßen Schließhilfsantriebs als solches beansprucht.

Wesentlich für das vorschlagsgemäße Verfahren ist, dass das Kupplungselement, insbesondere mittels des Antriebsmotors, in eine Kupplungsstellung gebracht wird, in der es für die Montage des Bowdenzugs wie oben angesprochen von außen zugänglich ist, und dass anschließend der Bowdenzug am Kupplungselement montiert wird. Dieses Verfahren lässt sich ohne weiteres im Rahmen der Fertigung des Kraftfahrzeugs durchführen, insbesondere indem die Verstellung des Kupplungselements in die Kupplungsstellung mittels des zumindest provisorisch bereits angeschlossenen Antriebsmotors möglich ist. Im Übrigen darf auf alle Ausführungen zu dem vorschlagsgemäßen Schließhilfsantrieb verwiesen werden.

Im Folgenden wir die Erfindung anhand einer lediglich ein Ausführungsbeispiel darstellenden Zeichnung näher erläutert. In der Zeichnung zeigt.
- Fig. 1: den strukturellen Aufbau eines vorschlagsgemäßen Schließhilfsantriebs und eines zugeordneten Kraftfahrzeugschlosses im montierten Zustand,
- Fig. 2: den Schließhilfsantrieb gemäß Fig. 1 in einem Längsschnitt entlang der Schnittlinie A-A und in einem Querschnitt entlang der Schnittlinie B-B, jeweils bei im Betriebs-Bewegungsbereich befindlichen Kupplungselement,
- Fig. 3: verschiedene Stationen eines vorschlagsgemäßen Verfahrens zur Montage eines Bowdenzugs an dem Schließhilfsantrieb gemäß Fig. 1 a) bei noch im Betriebs-Bewegungsbereich befindlichem Kupplungselement, b) bei in der Kupplungsstellung befindlichem Kupplungselement, c) bei mit dem Kupplungselement gekuppelten Bowdenzug und d) bei aufgesetztem Abdeckelement und

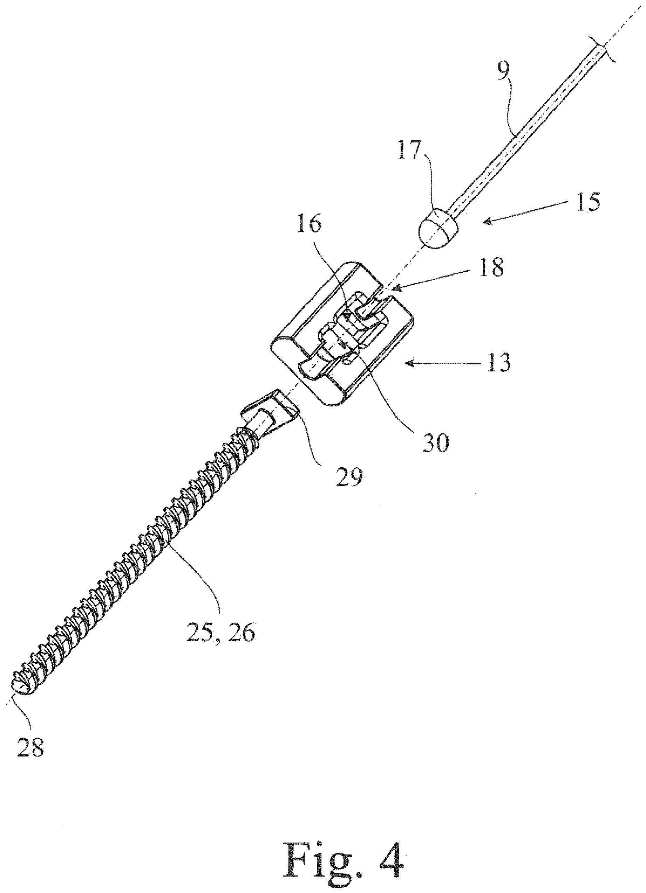

- Fig. 4: eine Explosionsdarstellung der Spindel und des Kupplungselements des Schließhilfsantriebs gemäß Fig. 1 sowie des Seelenendstücks des Bowdenzugs zwischen Schließhilfsantrieb und Kraftfahrzeugschloss.

Der vorschlagsgemäße Schließhilfsantrieb 1 ist einem Kraftfahrzeugschloss 2 zugeordnet und dient der Überführung des Kraftfahrzeugschlosses 2 von einem Vorschließzustand in einen Hauptschließzustand. Unter dem Begriff "Kraftfahrzeugschloss" sind wie oben erläutert alle Arten von Tür-, Hauben-, Deckel- oder Klappenschlösser zusammengefasst.

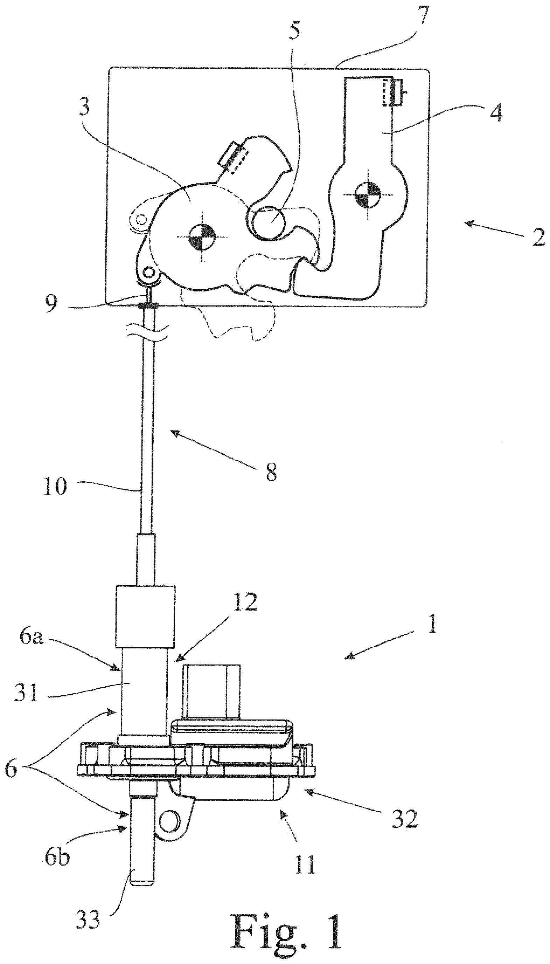

Fig. 1 zeigt den Aufbau des Kraftfahrzeugschlosses 2 mit den üblichen Schließelementen Schlossfalle 3 und Sperrklinke 4, wobei die Schlossfalle 3 in ebenfalls üblicher Weise mit einem Schließkeil 5 o. dgl. zusammenwirkt. Anstelle des Schließkeils 5 kann auch ein Schließkloben, ein Schließbügel o. dgl. vorgesehen sein.

Fig. 1 zeigt weiter, dass der Schließhilfsantrieb 1 ein eigenes Antriebsgehäuse 6 aufweist, das im montierten Zustand separat vom Kraftfahrzeugschloss 2 angeordnet ist. Das Kraftfahrzeugschloss 2 ist ebenfalls mit einem Gehäuse 7 ausgestattet, dass hier als Schlossgehäuse bezeichnet wird.

Der Schließhilfsantrieb 1 ist im montierten Zustand über einen Bowdenzug 8 antriebstechnisch mit dem Kraftfahrzeugschloss 2 gekoppelt. Der Bowdenzug 8 weist in üblicher Weise eine Bowdenzugseele 9 und eine Bowdenzughülle 10 auf. Zur Erzeugung von Antriebsbewegungen ist ein Antriebsmotor 11 mit nachgeschaltetem Vorschubgetriebe 12 vorgesehen. Bei den Antriebsbewegungen handelt es sich in erster Linie um solche Bewegungen, die eine Verstellung der Schlossfalle 3 von der in Fig. 1 in gestrichelter Linie dargestellten Vorschließstellung in die in durchgezogener Linie dargestellten Hauptschließstellung der Schlossfalle 3 bewirken. Hierfür ist die Schlossfalle 7 vorzugsweise mit der Bowdenzugsseele 9 des Bowdenzugs 8 gekoppelt, wie in Fig. 1 angedeutet ist.

Für das Ausleiten der Antriebsbewegungen ist ein Kupplungselement 13 vorgesehen, das mittels des Antriebsmotors 11 innerhalb des Antriebsgehäuses 6 verstellbar ist.

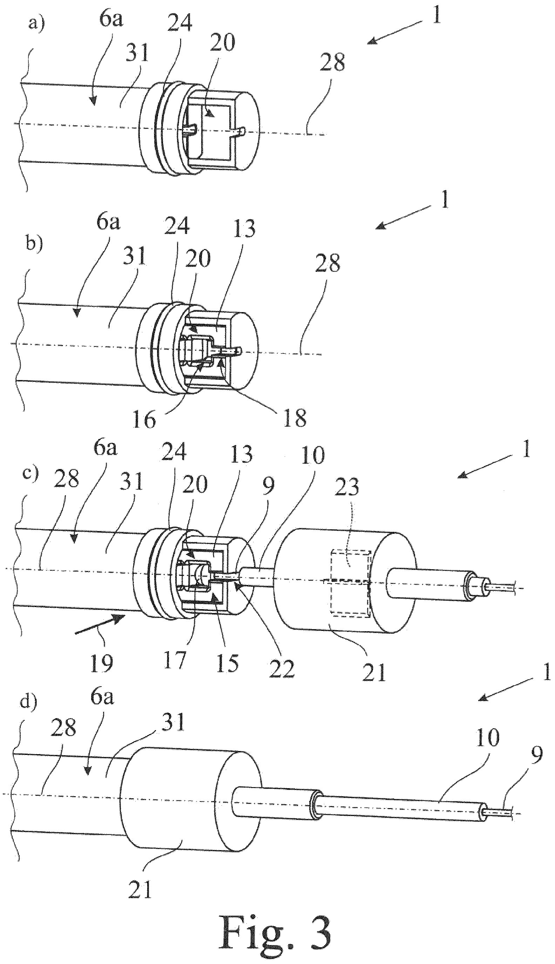

Vorschlagsgemäß ist das Kupplungselement 13, hier und vorzugsweise mittels des Antriebsmotors 11, in mindestens eine Kupplungsstellung, hier in genau eine Kupplungsstellung, bringbar, in der es für die Herstellung einer Kupplung des Bowdenzugs 8 mit dem Kupplungselement 13 zumindest zum Teil von außen zugänglich ist, und im Übrigen für die Herstellung einer entsprechenden Kupplung des Bowdenzugs 8 von außen unzugänglich ist. Die Kupplungsstellung ist in Fig. 3b beispielhaft zu erkennen.

Wie oben angedeutet, können mehrere Kupplungsstellungen vorgesehen sein, die eine entsprechende Zugänglichkeit des Kupplungselements 13 erlauben. Im Folgenden ist im Sinne einer einfachen Darstellung lediglich von einer einzigen Kupplungsstellung die Rede.

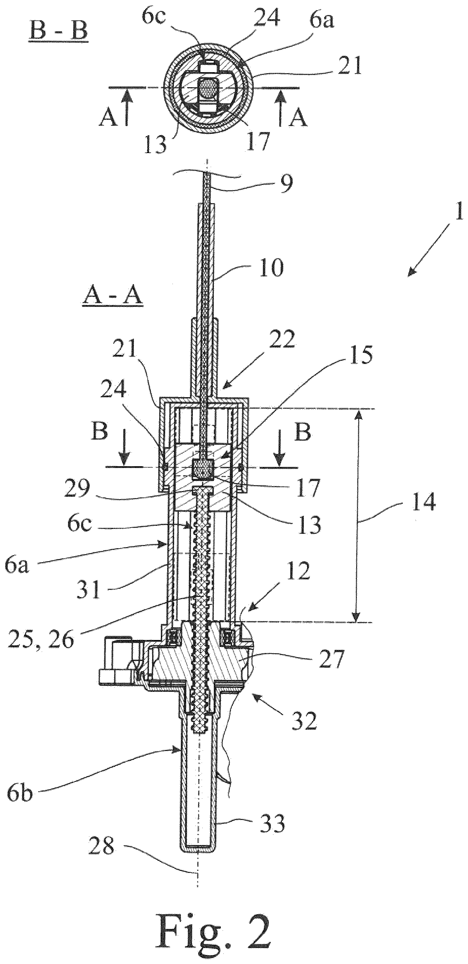

Fig. 2 zeigt den Ausgangszustand des Schließhilfsantriebs 1, aus dem heraus ein Schließhilfsvorgang gestartet werden kann. Durch eine Verstellung des Kupplungselements 13 mittels des Antriebsmotors 11 lässt sich die Bowdenzugseele 9 relativ zu der Bowdenzughülle 10 derart verstellen, dass die Schlossfalle 3 von der Vorschließstellung in die Hauptschließstellung überführt wird. Die Lage des Kupplungselements 13 am Ende des Schließvorgangs ist in Fig. 2 in gestrichelter Linie dargestellt. Anschließend erfolgt eine Rückstellung des Kupplungselements 13 durch eine umgekehrte Ansteuerung des Antriebsmotors 11 oder durch ein nicht dargestelltes Federelement. Daraus ergibt sich, dass sich das Kupplungselement 13 während eines Schließhilfsvorgangs innerhalb eines Betriebs-Bewegungsbereichs 14 verstellt, dessen Ausdehnung in Fig. 2 angedeutet ist.

Die in Fig. 2 gezeigte Ausgangsstellung des Kupplungselements 13 ist zusätzlich in der Darstellung gemäß Fig. 3a gezeigt. Hier wird deutlich, dass die Kupplungsstellung des Kupplungselements 13 außerhalb des Betriebs-Bewegungsbereichs 14 liegt. Alternativ kann es vorgesehen sein, dass die Kupplungsstellung des Kupplungselements 13 innerhalb des Betriebs-Bewegungsbereichs 14 oder an einem Rand des Betriebs-Bewegungsbereichs 14 liegt. Die erstgenannte und in der Zeichnung dargestellte Alternative zeigt eine hohe Sicherheit gegenüber einer ungewünschten Demontage des Bowdenzugs 8, wie noch gezeigt wird.

Eine Zusammenschau der Fig. 3b und 3c zeigt, dass für die Herstellung einer Kupplung des Bowdenzugs 8 ein Seelenendstück 15 der Bowdenzughülle 9 bei in der Kupplungsstellung befindlichem Kupplungselement 13 formschlüssig mit dem Kupplungselement 13 in Eingriff bringbar ist. Hierfür weist das Kupplungselement 13 vorzugsweise eine Kupplungsausformung 16 auf, die hier und vorzugsweise wannenartig ausgestaltet ist. Die wannenartige Kupplungsausformung 16 weist weiter vorzugsweise einen hier nicht dargestellten Hinterschnitt auf, der verhindert, dass das Seelenendstück 15 nach dem Einsetzen, beispielsweise durch die Elastizität des Bowdenzugs 8, ohne Längsbewegung wieder aus der Kupplungsausformung 16 herausspringen kann.

Interessant dabei ist die Tatsache, dass hier und vorzugsweise die Kupplungsausformung 16 eine formschlüssige Kupplung mit einer Bowdenzugtonne 17 erlaubt, die bezogen auf die Längserstreckung des Bowdenzugs 8 rotationssymmetrisch, insbesondere rundlich, ausgestaltet ist. Grundsätzlich kann allerdings jede Form einer Bowdenzugtonne 17 Anwendung finden.

In besonders bevorzugter Ausgestaltung wirkt der Formschluss zwischen Kupplungselement 13 und Seelenendstück 15 in Richtung der Antriebsbewegungen, so dass die Antriebsbewegungen über den Formschluss übertragen werden können. Jedoch erlaubt der Formschluss eine Drehbewegung zwischen Kupplungselement 13 und Seelenendstück 15 um die Längserstreckung des Bowdenzugs 8. Dies ergibt sich am besten aus einer Zusammenschau der Querschnittsdarstellung gemäß Fig. 2 und der Darstellung gemäß Fig. 3c. Bei entsprechend spielbehafteter Auslegung können mechanische Torsionsspannungen innerhalb der Bowdenzugseele 9 damit vollständig vennieden werden.

Fig. 3c zeigt, dass die Kupplungsausformung 16 im Kupplungselement 13 zusätzlich eine rinnenartige Ausformung 18 umfasst, die entlang der Längserstreckung des Bowdenzugs 8 verläuft. Dadurch lässt sich das Seelenendstück 15 mit der Bowdenzugtonne 17 leicht in das Kupplungselement 13 einhängen.

Um die obige Drehbarkeit zwischen Kupplungselement 13 und Seelenendstück 15 zu erzielen, kann es grundsätzlich auch vorgesehen sein, dass die Kupplungsausformung 16 bezogen auf die Längserstreckung des Bowdenzugs 8 selbst rotationssymmetrisch ist. Dann kann, wie oben angedeutet, irgendeine Art von Bowdenzugtonne 17 Anwendung finden.

Hier und vorzugsweise ist es so, dass für die Kupplung des Bowdenzugs 8 das Seelenendstück 15 der Bowdenzugseele 9 bei in der Kupplungsstellung befindlichem Kupplungselement 13 (Fig. 3b) mit einer Montagerichtung 19 im Wesentlichen quer zu der Längserstreckung des Bowdenzugs 8 in das Kupplungselement 13 einsetzbar ist. Das in Fig. 3 gezeigte Einhängen des Seelenendstücks 15 ist prozesssicher und mit geringem konstruktivem Aufwand realisierbar.

Bei einer anderen, hier nicht dargestellten, bevorzugten Ausführungsform ist es dagegen so, dass das Antriebsgehäuse 6 einen Montagekanal aufweist, in dem das Seelenendstück 15 der Bowdenzugseele 9 des Bowdenzugs 8 mit einer Montagerichtung im Wesentlichen entlang der Längserstreckung des Bowdenzugs 8 einsetzbar ist. Dabei ist es weiter vorzugsweise vorgesehen, dass der Montagekanal eine Umlenkkontur aufweist, die eine Umlenkung des Seelenendstücks 15 quer zu der Längserstreckung des Bowdenzugs 8 bewirkt. Im Einzelnen wird hier eine entlang der Längserstreckung des Bowdenzugs 8 verlaufende Montagerichtung in eine quer zu der Längserstreckung des Bowdenzugs 8 verlaufende Montagerichtung umgelenkt.

Fig. 3c zeigt, dass bei in der Kupplungsstellung befindlichem Kupplungselement 13 der Formschluss zwischen Seelenendstück 15 und Kupplungselement 13 noch lösbar ist. Bei im Betriebs-Bewegungsbereich dagegen befindlichen Kupplungselement 13 ist das Lösen des Formschlusses zwischen Seelenendstück 15 und Kupplungselement 13, hier und vorzugsweise durch das Antriebsgehäuse 6, gesperrt. Damit erübrigen sich irgendwelche zusätzlichen Befestigungselemente der Bowdenzugtonne 17 am Kupplungselement 13.

Grundsätzlich kann es vorgesehen sein, dass das Kupplungselement 13 in der Kupplungsstellung geringfügig aus dem Antriebsgehäuse 6 herausragt, so dass die Herstellung einer Kupplung des Bowdenzugs 8 am Kupplungselement 13 möglich ist. Hier und vorzugsweise ist es allerdings so, dass das Antriebsgehäuse 6 einen Gehäuseausschnitt 20 aufweist, durch den hindurch das in der Kupplungsstellung befindliche Kupplungselement 13 für die Kupplung des Bowdenzugs 8 am Kupplungselement 13 von außen, also von außerhalb des Antriebsgehäuses 6 aus, zugänglich ist. Der Gehäuseausschnitt 20 ist am besten der Darstellung gemäß Fig. 3a zu entnehmen.

Fig. 3c zeigt, dass ein Abdeckelement 21 vorgesehen ist, das bei montiertem Bowdenzug 8 die Einlaufstelle 22 des Bowdenzugs 8 in das Antriebsgehäuse 6 abdeckt. Vorzugsweise ist das Abdeckelement 21 als Abdecktülle ausgestaltet, die in besonders bevorzugter Ausgestaltung aus einem Kunststoff oder Gummimaterial hergestellt ist.

Das Abdeckelement 21 hat jedoch nicht nur eine Abdeck- und/oder Dichtfunktion, sondern sie sperrt bei in der Kupplungsstellung befindlichem Kupplungselement 13 (Fig. 3c) das ungewünschte Lösen des Formschlusses zwischen Seelenendstück 15 und Kupplungselement 13. Dies ist dadurch realisiert, dass das Abdeckelement 21 eine Sperrfläche 23 aufweist, die beim Aufsetzen des Abdeckelements 21 auf das Antriebsgehäuse 6 in sperrendem Eingriff mit dem Seelenendstück 15 des Bowdenzugs 8, sofern sich das Kupplungselement 13 in der Kupplungsstellung befindet. Der aufgesetzte Zustand des Abdeckelements 21 ist in Fig. 3d) gezeigt.

Wie oben angedeutet, stellt das Abdeckelement 21 eine Abdichtung gegenüber dem Antriebsgehäuse 6 einerseits und gegenüber der Bowdenzughülle 10 andererseits bereit, so dass der Gehäuseausschnitt 20 nach außen hin abgedichtet ist. Hierfür ist das Antriebsgehäuse 6 an der Eingriffsstelle mit dem Abdeckelement 21 mit einer Dichtung 24 ausgestattet, die hier und vorzugsweise als umlaufender O-Ring ausgestaltet ist.

Fig. 2 zeigt, dass das Vorschubgetriebe 12 ein Abtriebselement 25 aufweist, das mit dem Kupplungselement 13 gekoppelt ist. Hier und vorzugsweise steht das Abtriebselement 25, insbesondere lösbar, formschlüssig mit dem Kupplungselement 13 in Eingriff.

Das Vorschubgetriebe 12 kann grundsätzlich als Getriebe mit rotatorischem Abtrieb ausgestaltet sein. Dann ist das Abtriebselement 25 vorzugsweise als schwenkbarer Betätigungshebel o. dgl. ausgestaltet. Hier und vorzugsweise ist es allerdings so, dass das Vorschubgetriebe 12 einen linearen Abtrieb aufweist. Das Abtriebselement 25 ist entsprechend ausschließlich linear verstellbar.

Alternativ zu dem oben angesprochenen Formschluss zwischen dem Abtriebselement 25 und dem Kupplungselement 13 kann es vorgesehen sein, dass das Kupplungselement 13 ein integraler Bestandteil des Abtriebselements 25 ist.

Grundsätzlich kann das Kupplungselement 13 mehrteilig ausgestaltet sein. Hier und vorzugsweise ist das Kupplungselement 13 allerdings einstückig ausgestaltet. In besonders einfach zu fertigender Ausgestaltung ist das Kupplungselement 13 als einstückiges Kunststoff-Spritzgießteil ausgestaltet.

Wie oben angedeutet, sind für die Realisierung des Vorschubgetriebes 12 zahlreiche vorteilhafte Varianten denkbar. Fig. 2 zeigt, dass das Vorschubgetriebe 12 hier als Spindel-Spindelmuttergetriebe mit Spindel 26 und Spindelmutter 27 ausgestaltet ist. Dabei ist die Spindelmutter 27 vorzugsweise mit dem Antriebsmotor 11 gekoppelt, so dass die Spindel 26 das Abtriebselement 25 des Vorschubgetriebes 12 bereitstellt. Bei der Spindelmutter 27 handelt es sich vorzugsweise um ein Schneckenrad, dass mit einer nicht dargestellten Schnecke an einer Antriebswelle des Antriebsmotors 11 kämmt. Vorteilhafte Ausgestaltungen für den Antrieb der Spindelmutter 27 sind denkbar. Fig. 2 zeigt, dass die Spindelmutter 27 bezogen auf die geometrische Spindelachse 28 drehbar, jedoch axial fest gelagert ist.

Grundsätzlich kann es vorgesehen sein, dass das Kupplungselement 13 entlang der geometrischen Spindelachse 28 in dem Antriebsgehäuse 6 längsverschieblich, jedoch drehfest geführt ist. Hier und vorzugsweise ist es jedoch so, dass das Kupplungselement 13 selbst nicht in drehfestem Eingriff mit dem Antriebsgehäuse 6 steht. Allerdings ist die Spindel 26, insbesondere über ein Spindelendstück 29, mit dem Kupplungselement 13 gekoppelt und steht, weiter vorzugsweise, in bezogen auf die geometrische Spindelachse 28 drehfest mit dem Kupplungselement 13 in Eingriff. Weiter vorzugsweise ist es, wie in Fig. 2 dargestellt, vorgesehen, dass die Spindel 26, insbesondere das Spindelendstück 29, bezogen auf die geometrische Spindelachse 28 längsverschieblich, jedoch drehfest gegenüber dem Antriebsgehäuse 6 ist. Hierfür weist das Antriebsgehäuse 6 eine nutartige Ausformung 6c auf, in der das hier zumindest zum Teil zungenartige Spindelendstück 29 läuft. Dadurch, dass das Spindelendstück 29 bezogen auf die geometrische Spindelachse 28 drehfest mit dem Antriebsgehäuse 6 in Eingriff steht, ist im Ergebnis auch das Kupplungselement 13 gegenüber dem Antriebsgehäuse 6 drehfest angeordnet.

Alternativ dazu kann es vorgesehen sein, dass die Spindel 26 bezogen auf die geometrische Spindelachse 28 drehfest mit dem Kupplungselement 13 und das Kupplungselement 13 wiederum bezogen auf die geometrische Spindelachse 28 mit dem Antriebsgehäuse 6 drehfest in Eingriff steht. Andere vorteilhafte Varianten zur Realisierung der drehfesten Anordnung der Spindel 26 im Antriebsgehäuse 6 sind denkbar.

Fig. 2 zeigt, dass zwischen dem Spindelendstück 29 und dem Kupplungselement 13 ein Formschluss vorliegt, der auf ein Einsetzen des Spindelendstücks 29 mit einer Montagerichtung quer zu der geometrischen Spindelachse 28 zurückgeht. Für diesen Formschluss ist eine weitere Kupplungsausformung 30 im Kupplungselement 13 vorgesehen.

Das Kupplungselement 13 kann grundsätzlich als Auslöseelement für ein nicht dargestelltes Sensorelement dienen. Im einfachsten Fall handelt es sich bei dem Sensorelement um einen Mikroschalter, der durch das Kupplungselement 13 auslösbar ist. Dabei ist es besonders vorteilhaft, dass das Antriebsgehäuse 6 zwei Teilgehäuse 6a, 6b aufweist, die im montierten Zustand aneinander gefügt sind. Der Mikroschalter ist vorzugsweise vollständig innerhalb des Antriebsgehäuses 6 angeordnet. Dies bedeutet, dass der Mikroschalter bei geöffnetem Antriebsgehäuse 6 in seine Montagestellung eingesetzt, insbesondere eingeschoben, wird.

Weiter kann das Kupplungselement 13 genutzt werden, um mindestens einen Endanschlag für die Antriebsbewegungen bereitzustellen. Dabei ist es vorzugsweise vorgesehen, dass das Kupplungselement 13 mit einer entsprechenden Dämpfungsanordnung ausgestattet ist, so dass das Anfahren eines Endanschlags entsprechend gedämpft ist.

Die Bowdenzughülle 10 ist vorzugsweise am Antriebsgehäuse 6 angeordnet. Für die Kupplung der Bowdenzughülle 10 mit dem Antriebsgehäuse 6 sind verschiedene vorteilhafte Varianten denkbar. Vorzugsweise ist die Bowdenzughülle 10 bezogen auf die Längserstreckung des Bowdenzugs 8 drehbar am Antriebsgehäuse 6 angelenkt, so dass, wie oben im Zusammenhang mit der Bowdenzugseele 9 angesprochen, jegliche mechanische Torsionsspannung im Bowdenzug 8 vermieden wird.

Der strukturellen Ausgestaltung des Antriebsgehäuses 6 kommt vorliegend ebenfalls Bedeutung zu. Das Antriebsgehäuse 6 weist einen länglichen Abschnitt 31 auf, der das Kupplungselement 13 aufnimmt und an dessen Ende der oben angesprochene Gehäuseausschnitt 20 angeordnet ist. Der längliche Abschnitt 31 ist Bestandteil des Gehäuseteils 6a, der hier und vorzugsweise einstückig ausgestaltet ist. Das Antriebsgehäuse 6 weist im Übrigen einen deckelartigen Abschnitt 32 auf, der für die Aufnahme der Spindel 26 ebenfalls einen länglichen Abschnitt 33 aufweist. Der deckelartige Abschnitt 32 wird von dem zweiten Gehäuseteil 6b bereitgestellt, der hier und vorzugsweise ebenfalls einstückig ausgestaltet ist. Die beiden Gehäuseteile 6a, 6b werden in einer Montagebewegung, die im Wesentlichen entlang der geometrischen Spindelachse 28 verläuft, aneinander gefügt und verclipst, verschraubt, verklebt oder vergossen.

Nach einer weiteren Lehre, der ebenfalls eigenständige Bedeutung zukommt, wird ein Verfahren zur Montage des Bowdenzugs 8 an dem vorschlagsgemäßen Schließhilfsantrieb 1 beansprucht.

Wesentlich nach dem vorschlagsgemäßen Verfahren ist, dass Kupplungselement 13, hier und vorzugsweise mittels des Antriebsmotors 11, in eine Kupplungsstellung (Fig. 3b) gebracht wird, in der es für die Herstellung einer Kupplung des Bowdenzugs 8 mit dem Kupplungselement 13 von außen zugänglich ist, wobei anschließend der Bowdenzug 8 mit dem Kupplungselement 13 gekuppelt wird. Vorzugsweise geht der Verstellung des Kupplungselements 13 in die Kupplungsstellung eine Montage des Schließhilfsantriebs 1 und/oder des Kraftfahrzeugschlosses 2 in oder an der zugeordneten Kraftfahrzeugtür voraus. Dieser vorgeschaltete Montagevorgang geht vorzugsweise mit einem elektrischen Anschluss des Antriebsmotors 11 einher, so dass die Verstellung des Kupplungselements 13 in die Kupplungsstellung ohne weiteres motorisch erfolgen kann.

Im Zusammenhang mit dem vorschlagsgemäßen Verfahren darf noch darauf hingewiesen werden, dass die Montagerichtung für die Kupplung des Bowdenzugs 8 mit dem Kupplungselement 13 vorzugsweise quer zu der Längserstreckung des Bowdenzugs 8 erfolgt, wie oben erläutert. Insoweit und hinsichtlich möglicher Alternativen zu dieser Montagerichtung darf auf die obigen Ausführungen zu dem vorschlagsgemäßen Schließhilfsantrieb 1 verwiesen werden.

## Patentansprüche

1. Schließhilfsantrieb für ein Kraftfahrzeugschloss (2), wobei ein Antriebsgehäuse (6) vorgesehen ist, wobei der Schließhilfsantrieb (1) über einen Bowdenzug (8) mit Bowdenzugseele (9) und Bowdenzughülle (10) antriebstechnisch mit dem Kraftfahrzeugschloss (2) koppelbar ist, wobei ein Antriebsmotor (11) mit nachgeschaltetem Vorschubgetriebe (12) zur Erzeugung von Antriebsbewegungen sowie ein Kupplungselement (13) für das Ausleiten der Antriebsbewegungen vorgesehen sind,
**dadurch gekennzeichnet,**
**dass** das Kupplungselement (13), insbesondere mittels des Antriebsmotors (11), in mindestens eine Kupplungsstellung bringbar ist, in der es für die Herstellung einer Kupplung des Bowdenzugs (8) mit dem Kupplungselement (13) von außen zugänglich ist, und im Übrigen für die Herstellung einer Kupplung des Bowdenzugs (8) mit dem Kupplungselement (13) von außen unzugänglich ist.

2. Schließhilfsantrieb nach Anspruch 1, **dadurch gekennzeichnet, dass** sich das Kupplungselement (13) während eines Schließhilfsvorgangs innerhalb eines Betriebs-Bewegungsbereichs verstellt, vorzugsweise, dass die Kupplungsstellung außerhalb des Betriebs-Bewegungsbereichs liegt, oder, dass die Kupplungsstellung innerhalb des Betriebs-Bewegungsbereichs liegt.

3. Schließhilfsantrieb nach Anspruch 1 oder 2, **dadurch gekennzeichnet, dass** für die Kupplung des Bowdenzugs (8) ein Seelenendstück (15) der Bowdenzugseele (9) bei in der Kupplungsstellung befindlichem Kupplungselement (13) formschlüssig mit dem Kupplungselement (13) in Eingriff bringbar ist, vorzugsweise, dass das Kupplungselement (13) hierfür eine Kupplungsausformung (16) aufweist, weiter vorzugsweise, dass die Kupplungsausformung (16) eine formschlüssige Kopplung mit einer Bowdenzugtonne (17) erlaubt, die bezogen auf die Längserstreckung des Bowdenzugs (8) rotationssymmetrisch, insbesondere rundlich, ausgestaltet ist.

4. Schließhilfsantrieb nach Anspruch 3 **dadurch gekennzeichnet, dass** der Formschluss zwischen Kupplungselement (13) und Seelenendstück (15) in Richtung der Antriebsbewegungen wirkt, jedoch eine Drehbewegung zwischen Kupplungselement (13) und Seelenendstück (15) um die Längserstreckung des Bowdenzugs (8) erlaubt.

5. Schließhilfsantrieb nach einem der vorhergehenden Ansprüche, **dadurch gekennzeichnet, dass** für die Kupplung des Bowdenzugs (8) ein Seelenendstück (15) der Bowdenzugseele (9) bei in der Kupplungsstellung befindlichem Kupplungselement (13) mit einer Montagerichtung im Wesentlichen quer zu der Längserstreckung des Bowdenzugs (8) in das Kupplungselement (13) einsetzbar ist.

6. Schließhilfsantrieb nach einem der Ansprüche 3 bis 5, **dadurch gekennzeichnet, dass** das Antriebsgehäuse (6) einen Montagekanal aufweist, in den das Seelenendstück (15) der Bowdenzugseele (9) mit einer Montagerichtung im Wesentlichen entlang der Längserstreckung des Bowdenzugs (8) einsetzbar ist, vorzugsweise, dass der Montagekanal eine Umlenkkontur aufweist, die eine Umlenkung des Seelenendstücks (15) quer zu der Längserstreckung des Bowdenzugs (8) bewirkt.

7. Schließhilfsantrieb nach einem der Ansprüche 3 bis 6, **dadurch gekennzeichnet, dass** bei in der Kupplungsstellung befindlichem Kupplungselement (13) der Formschluss zwischen Seelenendstück (15) und Kupplungselement (13) lösbar ist und dass bei im Betriebs-Bewegungsbereich befindlichen Kupplungselement (13) das Lösen des Formschlusses zwischen Seelenendstück (15) und Kupplungselement (13), insbesondere durch das Antriebsgehäuse (6), gesperrt ist.

8. Schließhilfsantrieb nach einem der vorhergehenden Ansprüche, **dadurch gekennzeichnet, dass** das Antriebsgehäuse (6) einen Gehäuseausschnitt (20) aufweist, durch den hindurch das in der Kupplungsstellung befindliche Kupplungselement (13) für die Kupplung des Bowdenzugs (8) von außen zugänglich ist.

9. Schließhilfsantrieb nach einem der Ansprüche 3 bis 8, **dadurch gekennzeichnet, dass** ein Abdeckelement (21) vorgesehen ist, das bei montiertem Bowdenzug (8) die Einlaufstelle (22) des Bowdenzugs (8) in das Antriebsgehäuse (6) abdeckt und dass das Abdeckelement (21) bei in der Kupplungsstellung befindlichem Kupplungselement (13) das Lösen des Formschlusses zwischen Seelenendstück (15) und Kupplungselement (13) sperrt, vorzugsweise, dass das Abdeckelement (21) als Abdecktülle ausgestaltet ist.

10. Schließhilfsantrieb nach Anspruch 9, **dadurch gekennzeichnet, dass** das Abdeckelement (21) eine Abdichtung gegenüber dem Antriebsgehäuse (6) einerseits und gegenüber der Bowdenzuhülle (10) andererseits bereitstellt, so dass der Gehäuseausschnitt (20) nach außen hin abgedichtet ist.

11. Schließhilfsantrieb nach einem der vorhergehenden Ansprüche, **dadurch gekennzeichnet, dass** das Vorschubgetriebe (12) ein Abtriebselement (25) aufweist, das mit dem Kupplungselement (13) gekoppelt ist, vorzugsweise, dass das Abtriebselement (25) formschlüssig mit dem Kupplungselement (13) in Eingriff steht.

12. Schließhilfsantrieb nach einem der vorhergehenden Ansprüche, **dadurch gekennzeichnet, dass** das Vorschubgetriebe (12) als Spindel-Spindelmuttergetriebe mit Spindel (26) und Spindelmutter (27) ausgestaltet ist, vorzugsweise, dass die Spindelmutter (27) mit dem Antriebsmotor (11) gekoppelt ist, so dass die Spindel (26) das Abtriebselement (25) des Vorschubgetriebes (12) bereitstellt.

13. Schließhilfsantrieb nach einem der vorhergehenden Ansprüche, **dadurch gekennzeichnet, dass** das Kupplungselement (13) entlang einer geometrischen Spindelachse (28) in dem Antriebsgehäuse (6) längsverschieblich, jedoch drehfest geführt ist.

14. Schließhilfsantrieb nach Anspruch 12 und ggf. nach Anspruch 13, **dadurch gekennzeichnet, dass** die Spindel (26), insbesondere über ein Spindelendstück (29), mit dem Kupplungselement (13) gekoppelt ist, vorzugsweise, dass die Spindel (26) bezogen auf die geometrische Spindelachse (28) längsverschieblich, jedoch drehfest gegenüber dem Antriebsgehäuse (6) ist, vorzugsweise, dass das Spindelendstück (29) bezogen auf die geometrische Spindelachse (28) drehfest mit dem Antriebsgehäuse (6) in Eingriff steht, oder, dass die Spindel (26) bezogen auf die geometrische Spindelachse (28) drehfest mit dem Kupplungselement (13) und das Kupplungselement (13) mit dem Antriebsgehäuse (6) bezogen auf die geometrische Spindelachse (28) drehfest in Eingriff steht.

15. Verfahren zur Montage eines Bowdenzugs (8) an einem Schließhilfsantrieb (1) nach einem der vorhergehenden Ansprüche,
**dadurch gekennzeichnet,**
**dass** das Kupplungselement (13), insbesondere mittels des Antriebsmotors (11), in eine Kupplungsstellung gebracht wird, in der es für die Herstellung einer Kupplung des Bowdenzugs (8) mit dem Kupplungselement (13) von außen zugänglich ist, und dass anschließend der Bowdenzug (8) mit dem Kupplungselement (13) gekuppelt wird.

## Claims

1. Locking aid drive for a motor vehicle lock (2), a drive housing (6) being provided, the locking aid drive (1) being couplable in terms of drive to the motor vehicle lock (2) via a Bowden cable (8) with a Bowden cable core (9) and Bowden cable sheath (10) and a drive motor (11) with a downstream feed mechanism (12) for producing driving movements and a coupling element (13) for transferring the driving movements being provided,
**characterized in that**
the coupling element (13) can be brought, in particular by means of the drive motor (11), into at least one coupling position in which said coupling element is accessible from the outside for the production of a coupling of the Bowden cable (8) to the coupling element (13), and otherwise is inaccessible from the outside for the production of a coupling of the Bowden cable (8) to the coupling element (13) .

2. Locking aid drive according to Claim 1, **characterized in that** the coupling element (13) is adjusted within an operating movement range during a locking aid operation, preferably **in that** the coupling position lies outside the operating movement range, or **in that** the coupling position lies within the operating movement range.

3. Locking aid drive according to Claim 1 or 2, **characterized in that**, for the coupling of the Bowden cable (8), a core end piece (15) of the Bowden cable core (9) can be brought into engagement in a form-fitting manner with the coupling element (13) when the coupling element (13) is in the coupling position, preferably **in that** the coupling element (13) has a coupling formation (16) for this purpose, furthermore preferably **in that** the coupling formation (16) permits a form-fitting coupling to a Bowden cable drum (17) which has a rotationally symmetrical, in particular round configuration with respect to the longitudinal extent of the Bowden cable (8).

4. Locking aid drive according to Claim 3, **characterized in that** the form-fitting connection between coupling element (13) and core end piece (15) acts in the direction of the driving movements, but permits a rotational movement between coupling element (13) and core end piece (15) about the longitudinal extent of the Bowden cable (8).

5. Locking aid drive according to one of the preceding claims, **characterized in that**, for the coupling of the Bowden cable (8), a core end piece (15) of the Bowden cable core (9) is insertable into the coupling element (13) with an installation direction substantially transverse with respect to the longitudinal extent of the Bowden cable (8) when the coupling element (13) is in the coupling position.

6. Locking aid drive according to one of Claims 3 to 5, **characterized in that** the drive housing (6) has an installation channel into which the core end piece (15) of the Bowden cable core (9) is insertable with an installation direction substantially along the longitudinal extent of the Bowden cable (8), preferably **in that** the installation channel has a deflecting contour which brings about a deflection of the core end piece (15) transversely with respect to the longitudinal extent of the Bowden cable (8).

7. Locking aid drive according to one of Claims 3 to 6, **characterized in that**, when the coupling element (13) is in the coupling position, the form-fitting connection between core end piece (15) and coupling element (13) is releasable, and **in that**, when the coupling element (13) is in the operating movement range, the release of the form-fitting connection between core end piece (15) and coupling element (13) is blocked, in particular by the drive housing (6).

8. Locking aid drive according to one of the preceding claims, **characterized in that** the drive housing (6) has a housing cutout (20) through which the coupling element (13) in the coupling position is accessible from the outside for the coupling of the Bowden cable (8).

9. Locking aid drive according to one of Claims 3 to 8, **characterized in that** a covering element (21) is provided which, when the Bowden cable (8) is fitted, covers the entry point (22) of the Bowden cable (8) into the drive housing (6), and **in that**, when the coupling element (13) is in the coupling position, the covering element (21) locks the release of the form-fitting connection between core end piece (15) and coupling element (13), preferably **in that** the covering element (21) is configured as a covering bush.

10. Locking aid drive according to Claim 9, **characterized in that** the covering element (21) provides a seal in relation to the drive housing (6), on the one hand, and in relation to the Bowden cable sheath (10), on the other hand, such that the housing cutout (20) is sealed towards the outside.

11. Locking aid drive according to one of the preceding claims, **characterized in that** the feed mechanism (12) has an output element (25) which is coupled to the coupling element (13), preferably **in that** the output element (25) is in engagement in a form-fitting manner with the coupling element (13).

12. Locking aid drive according to one of the preceding claims, **characterized in that** the feed mechanism (12) is configured as a spindle/spindle nut mechanism with spindle (26) and spindle nut (27), preferably **in that** the spindle nut (27) is coupled to the drive motor (11) such that the spindle (26) provides the output element (25) of the feed mechanism (12).

13. Locking aid drive according to one of the preceding claims, **characterized in that** the coupling element (13) is guided in a longitudinally displaceable, but non-rotatable manner along a geometrical spindle axis (28) in the drive housing (6).

14. Locking aid drive according to Claim 12 and possibly according to Claim 13, **characterized in that** the spindle (26) is coupled, in particular via a spindle end piece (29), to the coupling element (13), preferably **in that** the spindle (26) is longitudinally displaceable with respect to the geometrical spindle axis (28), but is non-rotatable in relation to the drive housing (6), preferably **in that** the spindle end piece (29) is in engagement with the drive housing (6) non-rotatably with respect to the geometrical spindle axis (28), or **in that** the spindle (26) is in engagement with the coupling element (13) non-rotatably with respect to the geometrical spindle axis (28) and the coupling element (13) is in engagement with the drive housing (6) non-rotatably with respect to the geometrical spindle axis (28).

15. Method for installing a Bowden cable (8) on a locking aid drive (1) according to one of the preceding claims,
**characterized in that**
the coupling element (13) is brought, in particular by means of the drive motor (11), into a coupling position in which said coupling element is accessible from the outside for the production of a coupling of the Bowden cable (8) to the coupling element (13), and **in that** the Bowden cable (8) is subsequently coupled to the coupling element (13).

## Revendications

1. Entraînement d'aide à la fermeture pour une serrure de véhicule automobile (2), un boîtier d'entraînement (6) étant prévu, l'entraînement d'aide à la fermeture (1) pouvant être accouplé, par le biais d'un câble Bowden (8) avec une âme de câble Bowden (9) et une gaine de câble Bowden (10), par une technique d'entraînement à la serrure de véhicule automobile (2), un moteur d'entraînement (11) avec un mécanisme d'avance (12) monté en aval étant prévu pour générer des mouvements d'entraînement et un élément d'accouplement (13) étant prévu pour guider en sortie les mouvements d'entraînement,
**caractérisé en ce que**
l'élément d'accouplement (13), notamment au moyen du moteur d'entraînement (11), peut être amené dans au moins une position d'accouplement dans laquelle il est accessible depuis l'extérieur pour établir un accouplement du câble Bowden (8) avec l'élément d'accouplement (13), et hors de laquelle il n'est pas accessible depuis l'extérieur pour établir un accouplement du câble Bowden (8) avec l'élément d'accouplement (13).

2. Entraînement d'aide à la fermeture selon la revendication 1, **caractérisé en ce que** l'élément d'accouplement (13), pendant une opération d'aide à la fermeture, se déplace à l'intérieur d'une plage de déplacement fonctionnelle, de préférence **en ce que** la position d'accouplement est située à l'extérieur de la plage de déplacement fonctionnelle, ou **en ce que** la position d'accouplement est située à l'intérieur de la plage de déplacement fonctionnelle.

3. Entraînement d'aide à la fermeture selon la revendication 1 ou 2, **caractérisé en ce que** pour l'accouplement du câble Bowden (8), un embout d'âme (15) de l'âme de câble Bowden (9) peut être amené en prise par engagement par correspondance de formes avec l'élément d'accouplement (13) lorsque l'élément d'accouplement (13) se trouve dans la position d'accouplement, de préférence **en ce que** l'élément d'accouplement (13) présente à cet effet une formation d'accouplement (16), de préférence en outre, **en ce que** la formation d'accouplement (16) permet un accouplement par engagement par correspondance de formes avec un cylindre de câble Bowden (17) qui est configuré avec une symétrie de révolution, en particulier sous forme arrondie, par rapport à l'étendue longitudinale du câble Bowden (8).

4. Entraînement d'aide à la fermeture selon la revendication 3, **caractérisé en ce que** l'engagement par correspondance de formes entre l'élément d'accouplement (13) et l'embout d'âme (15) agit dans la direction des mouvements d'entraînement mais permet un mouvement de rotation entre l'élément d'accouplement (13) et l'embout d'âme (15) autour de l'étendue longitudinale du câble Bowden (8).

5. Entraînement d'aide à la fermeture selon l'une quelconque des revendications précédentes, **caractérisé en ce que** pour l'accouplement du câble Bowden (8), un embout d'âme (15) de l'âme de câble Bowden (9) peut être inséré dans l'élément d'accouplement (13) lorsque l'élément d'accouplement (13) se trouve dans la position d'accouplement avec une direction de montage essentiellement transversale à l'étendue longitudinale du câble Bowden (8).

6. Entraînement d'aide à la fermeture selon l'une quelconque des revendications 3 à 5, **caractérisé en ce que** le boîtier d'entraînement (6) présente un canal de montage dans lequel l'embout d'âme (15) de l'âme de câble Bowden (9) peut être inséré avec une direction de montage essentiellement le long de l'étendue longitudinale du câble Bowden (8), de préférence **en ce que** le canal de montage présente un contour de déviation qui provoque une déviation de l'embout d'âme (15) transversalement à l'étendue longitudinale du câble Bowden (8).

7. Entraînement d'aide à la fermeture selon l'une quelconque des revendications 3 à 6, **caractérisé en ce que** lorsque l'élément d'accouplement (13) se trouve dans la position d'accouplement, l'engagement par correspondance de formes entre l'embout d'âme (15) et l'élément d'accouplement (13) peut être desserré et **en ce que** lorsque l'élément d'accouplement (13) se trouve dans la plage de déplacement fonctionnelle, le desserrage de l'engagement par correspondance de formes entre l'embout d'âme (15) et l'élément d'accouplement (13) est bloqué, en particulier par le boîtier d'entraînement (6).

8. Entraînement d'aide à la fermeture selon l'une quelconque des revendications précédentes, **caractérisé en ce que** le boîtier d'entraînement (6) présente une portion de boîtier (20) par le biais de laquelle l'élément d'accouplement (13) se trouvant dans la position d'accouplement est accessible de l'extérieur pour l'accouplement du câble Bowden (8).

9. Entraînement d'aide à la fermeture selon l'une quelconque des revendications 3 à 8, **caractérisé en ce qu'**un élément de recouvrement (21) est prévu, lequel, lorsque le câble Bowden (8) est monté, recouvre le point d'entrée (22) du câble Bowden (8) dans le boîtier d'entraînement (6) et **en ce que** l'élément de recouvrement (21), lorsque l'élément d'accouplement (13) se trouve dans la position d'accouplement, bloque le desserrage de l'engagement par correspondance de formes entre l'embout d'âme (15) et l'élément d'accouplement (13), de préférence **en ce que** l'élément de recouvrement (21) est réalisé sous forme de douille de recouvrement.

10. Entraînement d'aide à la fermeture selon la revendication 9, **caractérisé en ce que** l'élément de recouvrement (21) fournit une étanchéité vis-à-vis du boîtier d'entraînement (6) d'une part, et vis-à-vis de la douille de câble Bowden (10) d'autre part, de telle sorte que la portion de boîtier (20) est étanchéifiée vers l'extérieur.

11. Entraînement d'aide à la fermeture selon l'une quelconque des revendications précédentes, **caractérisé en ce que** le mécanisme d'avance (12) présente un élément de prise de force (25) qui est accouplé à l'élément d'accouplement (13), de préférence **en ce que** l'élément de prise de force (25) est en prise par engagement par correspondance de formes avec l'élément d'accouplement (13).

12. Entraînement d'aide à la fermeture selon l'une quelconque des revendications précédentes, **caractérisé en ce que** le mécanisme d'avance (12) est réalisé sous forme de transmission à broche et écrou de broche avec une broche (26) et un écrou de broche (27), de préférence **en ce que** l'écrou de broche (27) est accouplé au moteur d'entraînement (11) de telle sorte que la broche (26) fournisse l'élément de prise de force (25) du mécanisme d'avance (12).

13. Entraînement d'aide à la fermeture selon l'une quelconque des revendications précédentes, **caractérisé en ce que** l'élément d'accouplement (13) est guidé de manière déplaçable longitudinalement mais solidaire en rotation le long d'un axe de broche géométrique (28) dans le boîtier d'entraînement (6).

14. Entraînement d'aide à la fermeture selon la revendication 12 et éventuellement selon la revendication 13, **caractérisé en ce que** la broche (26) est accouplée notamment par le biais d'un embout de broche (29) à l'élément d'accouplement (13), de préférence **en ce que** la broche (26) est déplaçable longitudinalement par rapport à l'axe de broche géométrique (28) mais est solidaire en rotation par rapport au boîtier d'entraînement (6), de préférence **en ce que** l'embout de broche (29) est en prise de manière solidaire en rotation avec le boîtier d'entraînement (6) par rapport à l'axe de broche géométrique (28) ou **en ce que** la broche (26), par rapport à l'axe de broche géométrique (28), est en prise de manière solidaire en rotation avec l'élément d'accouplement (13) et l'élément d'accouplement (13) est en prise de manière solidaire en rotation avec le boîtier d'entraînement (6) par rapport à l'axe de broche géométrique (28).

15. Procédé de montage d'un câble Bowden (8) sur un entraînement d'aide à la fermeture (1) selon l'une quelconque des revendications précédentes,
**caractérisé en ce que**
l'élément d'accouplement (13), notamment au moyen du moteur d'entraînement (11), est amené dans une position d'accouplement dans laquelle il est accessible depuis l'extérieur pour établir un accouplement du câble Bowden (8) avec l'élément d'accouplement (13), et **en ce qu'**ensuite le câble Bowden (8) est accouplé à l'élément d'accouplement (13).
